# EUROPEAN PATENT SPECIFICATION

(11) **EP 0 769 907 B1**
(45) Date of publication and mention of the grant of the patent: **26.09.2007**
(21) Application number: 95924455.9
(22) Date of filing: 12.07.1995
(51) Int. Cl.: A01N 43/80, A01N 33/12

(54) **BACTERICIDAL COMPOSITIONS AND ARTICLES CONTAINING THEM**
BAKTERIZIDE ZUSAMMENSETZUNGEN UND DIESE ENTHALTENDE ARTIKEL
COMPOSITIONS BACTERICIDES ET ARTICLES LES CONTENANT

(30) Priority: 12.07.1994 GB 9414016; 24.11.1994 GB 9423748
(43) Date of publication of application: 02.05.1997
(73) Proprietor: Fenchurch Environmental Group Limited, Warrington, Cheshire WA4 5LF (GB)
(72) Inventor: WOOLARD, Trevor, Dorset BH14 0RS (GB)
(74) Representative: Hutchins, Michael Richard
(86) International application number: PCT/GB1995/001637
(87) International publication number: WO 1996/001562

(56) References cited:
- EP-A- 0 513 637
- WO-A-90/11015
- US-A- 4 173 643
- US-A- 5 091 102
- US-A- 5 145 981

## Description

The present invention relates to bactericidal compositions suitable for use in filters or component parts of an air conditioning or ventilation system, and processes for their preparation.

A great deal of time and effort, in a wide range of technical fields is currently devoted to overcoming the problem of bacterial infection and contamination. In the office, and in the home, there are many everday objects which are touched or handled on a regular basis by numerous people. Such items, if not cleaned properly and regularly, tend to harbour and accumulate dirt and germs and this can contribute to the spread of illness and disease. Disinfection achieved by the use of disinfectants is short-lived. Moreover, the disinfection of objects item by item is time-consuming and there is no easy way of telling whether the required standard of disinfection has been achieved.

On many occasions filters are employed to regulate the flow of air between different locations. Hitherto, such filters have had only limited success in controlling the spread of bacterial infection from one location to another.

Bacterial contamination can be a significant problem in the context of air-conditioning, ventilation and air filtration systems. It will readily be appreciated that if pathogenic disease-causing bacteria find their way into the air-conditioning or ventilation shafts of a building, they will rapidly be circulated throughout the building thereby greatly increasing the likelihood of the spread of infection and disease. This can be a particular problem in hospitals, for example, where the weakened or suppressed immune systems of many patients will render them much more susceptible to infection. It would therefore be highly desirable to be able to provide a means of treating air-conditioning and ventilation systems, and their component parts such as trunking, conduits and air filtration systems, with anti-bacterial agents to reduce or eliminate the spread of pathogenic bacteria.

Thus there exists a need to provide articles, objects and materials, particularly those associated with the food processing industry, and those associated with air-conditioning and ventilation of buildings, with a means of preventing bacterial contamination.

It has been known previously to provide articles with an ability to resist bacterial contamination by incorporating a bactericidal compound or composition into the matrix of the material from which the article is formed. This approach is exemplified by International Patent application, publication number WO 90/11015 (HYGENICO), and the various documents cited therein. WO 90/11015 discloses the incorporating into the matrix of the article of a combination of an organoarsenic antibacterial agent such as 10, 10-oxybisphenoxarsine (OBPA), with an alkylated diaminoalkane antibacterial agent such as a 1-alkylamino-3-amino propane. However, this combination, although undoubtedly effective against a broad spectrum of both gram positive and gram negative bacteria, is not suited to use with items and articles destined to come into contact with food, and is not authorised for use in conjunction with such articles.

A further problem with the combination of bactericidal agents disclosed in WO 90/11015 is that they have been found to be incompatible with certain additives commonly used in food-grade plastics materials, particularly PVC.

US 4173643 discloses synergistic bactericidal combinations of an isothiazolinone, with a benzalkonium halide. The combinations are formulated into compositions using appropriate solvents such as glycols. The composition is used for treatment of organic matter, like for instance chicken manure. The treatment of filters or component parts of air conditioning or ventilation systems is not suggested.

EP 0513637 discloses compositions in particular for disinfecting articles used in the human environment comprising isothiazolinones and a benzalkonium chloride. The compositions do not contain non-volatile carriers and/or a glycol. The compositions in EP 0513637 are not used to treat filters or as component parts of air conditioning or ventilation systems.

US 5091102 discloses the antibacterial surface treatment of non-woven fabrics for so called dry wipes but also for mats and air filters with a nonaqueous composition comprising a benzalkonium halide antimicrobial cationic surfactant.

It is an object of the invention to provide anti-bacterial compositions and methods of treating the components of air-conditioning, ventilation and air filtration systems to prevent or reduce bacterial contamination of air passing therethrough.

It has now been found that a combination of a benzalkonium-type disinfecting agent and an isothiazolinone disinfecting agent can meet the above criteria. Accordingly, in a first aspect the present invention provides an article, which is a filter or a component part of an air conditioning system or a component part of a ventilation system, the article containing a bactericidal composition containing an isothiazolinone, a benzalkonium halide and a liquid carrier selected from alkylene or polyalkylene glycol.

The isothiazolinone can be a substituted or unsubstituted isothiazolin-3-one, and particular examples of substituted isothiazolin-3-ones are these bearing a substituent such as halogen (e.g. a chloro-substituent) in the 5-position.

Advantageously the isothiazolinone is selected from 5-chloro-2-methyl-4-isothiazolin-3-one, or 2-methyl-4-isothiazolin-3-one, or a mixture thereof. Preferably the isothiazolinone is a mixture of the two aforesaid isothiazolinones.

Examples of benzalkonium halides include N-alkyl-N-benzyl dimethylammonium chloride.

The N-alkyl group typically contains from 12 to 16 carbon atoms and a particularly preferred benzalkonium compound is a mixture of N-C₁₄alkyl-N-benzyl-dimethylammonium chloride, N-C₁₂alkyl-N-benzyl-dimethylammonium chloride and N-C₁₆alkyl-N-benzyl-dimethylammonium chloride, most preferably in the ratio 50:40:10.

The weight ratio of the isothiazolinone to benzalkonium halide in the composition can vary, for example from about 1:500 to about 1:1. More usually, the weight ratio will lie in the range from about 1:300 to about 1:3. For example in one embodiment the weight ratio lies between about 1:30 and about 1:40. In another embodiment, the weight ratio lies between about 1:3 and 1:4.

The term "weight ratio" as used herein refers to the dry weights of the component compounds.

In a further aspect, the invention provides an article comprising a solid or liquid matrix containing a bactericidal composition as hereinbefore defined. The matrix can comprise between about 0.05% by weight and 10T by weight of the bactericidal composition, for example between about 0.2% and 5% by weight.

For example, the matrix can be a solid polymeric matrix formed from any natural or synthetic plastics material such as ethylene vinyl acetate copolymer (EVA), polyvinylchloride (PVC), polyethylene, polypropylene, thermoplastic rubbers such as butadiene-based block copolymers, natural rubbers and derivates thereof.

It is preferred that the plastics material is thermoformable at a temperature of 160°C or less, and a particularly preferred plastics material is ethylene vinyl acetate (EVA) which can be thermoformed by heating to 120°C. It is preferred that the plastics materials should be thermoformable at temperatures of 160°C or less because this reduces the likelihood of thermal degradation of the bactericidal compositions occurring.

Examples of solid articles formed from a matrix incorporating the bactericidal compositions include filters and those which in everyday use are handled or touched frequently by people. Such articles include in-wall fans, filters, door handles, door touch plates, lavatory handles, lavatory seats, wall cladding materials, telephones and the like.

Still further examples of solid articles incorporating the bactericidal compositions of the present invention are ducting panels, tubes and conduit and other component parts of air-conditioning and ventilation systems.

An advantage of the compositions and articles of the present invention is that they exhibit bactericidal activity against both gram positive and gram negative bacteria, yeasts, moulds, and fungi.

The compositions of the present invention can be mixed with polymeric and plastics materials and moulded by commonplace moulding methods such as injection moulding, vacuum forming, rotomoulding and the like without substantial loss of bactericidal activity. For example, the compositions can be incorporated into a plastics material and moulded to a shape that can be used to replace, cover, fit over, or fit into any product which is regularly handled by significant numbers of people. For example, the matrix can be moulded into a shape to fit over or into any household or office products such as a door knob, door touch plate, lavatory handle, lavatory seat as well as cladding panels, for example panels made of glass reinforced plastic (GRP) and polyvinylchloride (PVC).

In another aspect, the invention provides a method of preparing a moulded article, which method comprises forming a bactericidal composition containing a benzalkonium halide, an isothiazolinone as hereinbefore defined and a liquid carrier selected from alkylene or polyalkylene glycol, mixing the composition with a polymeric or plastics material and moulding said mixture to form the article.

The liquid carriers are the alkylene and polyalkylene glycols, e.g. diethylene glycol, hexylene glycol and polyethylene glycol. A preferred glycol is diethylene glycol.

The compositions of the present invention can be used to treat air filters, for example filters of the type used in air-conditioning and ventilation systems. Filter membranes used in such systems typically are formed from polypropylene or paper and can be treated with liquid compositions according to the present invention to impart anti-bacterial properties to the filter membranes. Typically, the liquid compositions of the invention will be sprayed on to the filter in the form of an aqueous solution, the water then being allowed to evaporate. As an alternative to spraying, the filter membranes may be dipped in the solution.

It has been found that by incorporating such non-volatile liquid carriers into the compositions, following initial evaporation of the water, the anti-bacterial compositions remain on the filter in solution form, and it has been found that in this form they are much more effective in killing bacteria. It will be appreciated that the filter should be loaded with a sufficient quantity of the composition to provide the desired anti-bacterial effect, whilst ensuring that the loading of non-volatile carrier liquid is not so great as to cause clogging of the filter.

The bactericidal compositions of the invention may also be incorporated into surface coating material such as paints. For example, the compositions may be incorporated into standard paint bases, e.g. oil-based paints or emulsion paints and the resulting bactericidal paints used to treat surfaces in areas where it is desired to reduce or eliminate bacterial contamination. For example, paints incorporating the bactericidal compositions of the present invention may be used to treat the inner surfaces of air conduits and pipes used in air-conditioning and ventilation systems.

In a further aspect, the invention provides articles such as panels and conduits for air-conditioning and ventilation systems, coated with a paint composition comprising the bactericidal compositions of the present invention.

In a still further aspect, the invention provides a method of treating an air-conditioning system or ventilation system in a building to provide the air-conditioning system or ventilation system with anti-bacterial properties, which method comprises coating the surfaces of ventilation shafts, conduits and pipes, and any air filters making up the system with a composition or compositions comprising a bactericidal composition as hereinbefore defined.

The articles of the present invention, in addition to containing the bactericidal compositions, can also contain one or more other substances such as other bactericidal agents, biocidal agent, algaecidal and fungicidal agents. Such other substances typically are incorporated into the mixture prior to moulding.

An advantage of the compositions and articles of the present invention is that whereas it has previously been considered that disinfectants only normally work in a wet environment, and cease to work when the disinfectant dries out, the articles of the present invention continue to exhibit bactericidal activity in the dry state. Thus the articles of the invention do not require repeating wiping down with disinfectant in order to prevent the build-up of bacteria. Moreover, the bactericidal activity appears to extend a short distance out from the surface of the article, to form a "halo" of bactericidal activity and it is speculated that this may be due to slow leaching of one or both bactericidal agents from the matrix.

The composition and articles of the present invention are bactericidal against a wide range of gram positive and gram negative bacteria, such as Bacillus cereus, Bacillus subtilis, Brevibacterium ammoniagenes, Brucella abortus, Klebsiella pneumoniae, Lactobacillus casei, Proteus vulgaris, Listeria monocytogenes, Pseudomonas aeruginosa, Salmonella gallinarum, Salmonella typhosa, Staphylococcus aureus, Streptococcus faecalis, Flavobacterium species, Bacillus species, Escherichia species, Aeromonas species, Achromobacter species and Alcalignenes species.

The compositions and articles of the present invention also have activity against fungi such as Cephalosporium species, Cladosporium species, Fusarium species, Paecilomyces species, Penicllium species Sterptomyces species, Trichophyton interdigitale, Chaetorarium globesum, Aspergillus niger, and Ceniphora puteana, yeasts such as Monilia albicans and Saccharomyces cerevisiae, and algae such as Chlorella pyrenoidosa and Anabaena cylindrica.

The preparation and properties of the compositions and articles of the present invention will now be illustrated, but not limited, by the following examples.

### EXAMPLE 1

One volume of a solution obtained from Thor Chemicals, Cheadlehulme, Cheshire, UK containing 5-chloro-2-methyl-4-isothiazolin-3-one and 2-methyl-4-isothiazolin-3-one in polyethylene glycol, the combined weights of the isothiazolinones constituting 1.5% by weight of the solution, was blended with one volume of a solution of 50% N-alkyl-N-benzyl-dimethylammonium chloride (N-alkyl = 50% C₁₄, 40% C₁₂, 10% C₁₀) in polyethylene glycol (obtained from Rhone Poulenc). The resulting mixture (0.24 kg) was blended with a conventional GRP resin to give a total weight of 8kg resin/bactericidal mixture. Catalyst (1-1.5 weight %) was added to the resin in standard fashion, and the resulting mixture was spread over fibre-glass matting (12kg) and allowed to harden to give GRP sheet.

### Microbiological Properties

Samples of GRP prepared in accordance with Example 1 and measuring approximately 7x7cm and containing the bactericidal compositions were tested against control samples containing no bactericidal composition in the following manner.

### Surface contamination

A duplicate sample of extruded glass fibre approximately 7x7cm was contaminated with Staph.aureus at a concentration of approximately 10⁶ cfu/ml. Swabs, soaked in nutrient broth, were taken at 1 minute, 5 minutes, 10 minutes, 30 minutes and 1 hour. These were subcultured onto DST nutrient medium and incubated at 37°C for 18 hours. For samples including the bactericidal compositions of the invention, bactericidal activity was observed after 5 minutes. Numbers of organisms dropped rapidly after 5 minutes, indicating bacterial kill.

### EXAMPLE 2

A solution containing a mixture of 5-chloro-2-methyl-4-isothiazolin-3-one, 2-methyl-4-isothiazolin-3-one and N-alkyl-N-benzyl-dimethylammonium chloride (N-alkyl = 50% C₁₄, 40% C₁₂, 10% C₁₀) in polyethylene glycol prepared in accordance with Example 1 was mixed with EVA pellets in an amount corresponding to 5% by weight of the total weight of the solution/pellet mixture in such a way as to ensure thorough coating of the pellets with the mixture. The coated pellets were then introduced into the hopper of a conventional injection moulding machine and moulded into a variety of shapes and sizes. Articles formed by this method are found to have excellent bactericidal properties.

### EXAMPLE 3

Ten volumes of a solution obtained from Thor Chemicals, Cheadlehulme, Cheshire, UK containing 5-chloro-2-methyl-4-isothiazolin-3-one and 2-methyl-4-isothiazolin-3-one in polyethylene glycol, the combined weights of the isothizolinones constituting 1.5% by weight of the solution, were blended with one volume of a solution of 50% N-alkyl-N-benzyl-dimethylammonium chloride (N-alkyl = 50% C₁₄, 40% C₁₂, 10% C₁₀) in polyethylene glycol (obtained from Rhone Poulenc). The resulting polyethylene glycol solution was mixed with EVA pellets and moulded into various products in the manner described in Example 2. Articles formed by this method are found to have excellent bactericidal properties.

### EXAMPLE 4

The polyethylene glycol solution of Example 3 was diluted with water (one volume polyethylene glycol solution:eight volumes of water), and the resulting solution was sprayed on to a standard polypropylene air filter. Following evaporation of the water, there resulted an air filter having excellent anti-bacterial properties.

### EXAMPLE 5

Two volumes of the polyethylene glycol solution of Example 3 were mixed with ten volumes of a standard oil-based HMG grey primer paint manufactured by Marcel Guest, to give an anti-bacterial paint composition.

A galvanised metal air conduit of the type used in air-conditioning and ventilation systems was treated with a phosphoric acid composition to prime the galvanised metal surface, and the primed surface was then coated with the anti-bacterial paint composition.

Air-conditioning systems and building ventilation systems incorporating trunking treated in accordance with this example, and incorporating air filters treated in accordance with Example 4 provide excellent protection against the spread of pathogenic disease-carrying bacteria through buildings.

It will readily be apparent that numerous modifications and alterations could be made to the exemplified composition and article without departing from the principles underlying the invention, and all such modifications and alterations are intended to be with the scope of this application.

### EXAMPLE 6

Five volumes (100cm³) of a 16.5% w/v solution of a mixture of 5-chloro-2-methyl-4-isothiazolinone-3-one and 2-methyl-4-isothiazolinone-3-one in diethylene glycol were mixed with one volume (20cm³) of a 50% w/v solution of N-alkyl-N-benzyl-dimethylammonium chloride (N-alkyl = 50% C₁₄, 40% C₁₂, 10% C₁₀) in diethylene glycol to give a bactericidal compositions which was then used to prepare a bactericidal paint.

For oil based paints, the bactericidal composition was added to a conventional oil paint base at a concentration of 5cm³ per 100cm³ of paint.

For emulsion paints, the bactericidal composition was diluted with water to a strength of 4:1 or 8:1 (water:bactericidal composition), and the resulting aqueous composition was added to a conventional emulstion paint base at a concentration of 10cm³ 100cm³ of paint.

### EXAMPLE 7

One volume of a 16.5% of w/v solution of a mixture of 5-chloro-2-methyl-4-isothiazolinone-3-one and 2-methyl-4-isothiazolinone-3-one in diethylene glycol were mixed with one volume (20cm³) of a 50% w/v solution of N-alkyl-N-benzyl-dimethylammonium chloride (N-alkyl = 50% C₁₄, 40% C₁₂, 10% C₁₀) in diethylene glycol to give a bactericidal composition.

The bactericidal composition (20cm³) was then diluted with water to a strength of 4:1 or 8:1 (water:bactericidal composition) and the resulting solution was used to spray or dip conventional polypropylene filter elements.

## Claims

1. An article which is a filter or a component part of an air conditioning system or a component part of a ventilation system, the article containing a bactericidal composition containing an isothiazolinone, a benzalkonium halide and a liquid carrier selected from an alkylene or polyalkylene glycol.

2. An article as claimed in claim 1 being a filter or a component part of an air conditioning system or a component part of a ventilation system, said component part being selected from ventilation shafts, conduits, pipes and air filters.

3. An article according to claim 1 or claim 2 wherein the alkylene or polyalkylene glycol is selected from diethylene glycol, hexylene glycol and polyethylene glycol.

4. An article according to claim 3 wherein the alkylene or polyalkylene glycol is diethylene glycol.

5. An article according to any one of the preceding claims wherein the isothiazolinone is a substituted or unsubstituted isothiazolin-3-one.

6. An article according to claim 5 wherein the isothiazolinone is an isothiazolin-3-one bearing a substituent such as a halogen in the 5-position.

7. An article according to claim 6 wherein the isothiazolinone is selected from 5-chloro-2-methyl-4-isothiazolin-3-one, 2-methyl-4-isothiazolin-3-one and mixtures thereof.

8. An article according to any one of claims 1 to 7 wherein the benzalkonium halide is an N-alkyl-N-benzyl dimethylammonium chloride, for example a mixture of N-C₁₄alkyl-N-benzyl-dimethylammonium chloride, N-C₁₂alkyl-N-benzyl-dimethylammonium chloride and N-C₁₆alkyl-N-benzyl-dimethylammonium chloride.

9. An article according to any one of claims 1 or 3 to 8 comprising a solid matrix containing the bactericidal composition.

10. An article according to claim 9 wherein the solid matrix comprises between about 0.05% by weight and 10% by weight of the bactericidal composition.

11. An article according to claim 10 wherein the solid matrix comprises between about 0.2% by weight and 5% by weight of the bactericidal composition.

12. An article according to claims 9 to 11 wherein the solid matrix is a solid polymeric matrix formed from plastics material.

13. An article according to claim 12 wherein the plastics material is selected from ethylene vinyl acetate copolymer (EVA), poly(vinylchloride) (PVC), polyethylene, polypropylene, thermoplastic rubbers such as butadiene-based block copolymer, natural rubbers and derivatives thereof.

14. An article according to claim 13 wherein the plastics material is ethylene vinyl acetate (EVA).

15. An article according to claims 12 to 14 wherein the plastics material is thermo-formable at a temperature of 160°C or less.

16. A method of imparting bactericidal properties to an article as claimed in any one of the preceding claims by treating the article, by spraying or dipping, with a bactericidal composition comprising an isothiazolinone, a benzalkonium halide in an aqueous solution containing a liquid carrier selected from an alkylene or a polyalkylene glycol.

17. A method according to claim 16 wherein the bactericidal composition is sprayed on to the air filter in the form of an aqueous solution containing the non-volatile liquid carrier, and the water is then allowed to evaporate from the air filter.

18. A method according to claim 16 wherein the air filter is dipped into an aqueous solution containing the non-volatile carrier, and the water is then allowed to evaporate from the air filter.

19. A method according to claim 17 of treating a component part of an air-conditioning system or ventilation system in a building to provide the air-conditioning system or ventilation system with anti-bacterial properties, which method comprises coating the surfaces of the component parts making up the ventilation shafts, conduits and pipes, and any air filters making up the system with a bactericidal composition comprising an isothiazolinone and a benzalkonium halide and a liquid carrier which is a glycol as defined in any one of claims 1 to 4.

20. An article as claimed in any one of claims 1-15 being selected from panels and conduits for air conditioning systems and ventilation systems, coated with a paint composition comprising a bacterial composition containing an isothiazolinone, a benzalkonium halide and a liquid carrier which is a glycol.

## Patentansprüche

1. Gegenstand, der als ein Filter oder ein Bestandteil eines Klimaanlagensystems oder als ein Bestandteil eines Ventilationssystems vorliegt, wobei der Gegenstand eine bakterizide Zusammensetzung umfasst, die ein Isothiazolinon, ein Benzalkonium-Halogenid und einen flüssigen Träger ausgewählt unter einem Alkylen- oder Polyalkylenglycol umfasst.

2. Gegenstand nach Anspruch 1, der als Filter oder als ein Bestandteil eines Klimaanlagensystems oder als ein Bestandteil eines Ventilationssystems vorliegt, wobei der Bestandteil aus Lüftungsschächten, Leitungen, Rohren und Luftfiltern ausgewählt wird.

3. Gegenstand nach Anspruch 1 oder Anspruch 2, worin das Alkylen- oder Polyalkylenglycol ausgewählt ist unter Diethylenglycol, Hexylenglycol und Polyethylenglycol.

4. Gegenstand nach Anspruch 3, worin das Alkylen- oder Polyalkylenglycol als Diethylenglycol vorliegt.

5. Gegenstand nach einem der vorstehenden Ansprüche, worin das Isothiazolinon als ein substituiertes oder unsubstituiertes Isothiazolin-3-on vorliegt.

6. Gegenstand nach Anspruch 5, worin das Isothiazolinon als ein Isothiazolin-3-on vorliegt, das einen Substituenten, wie ein Halogen, in der 5-Position trägt.

7. Gegenstand nach Anspruch 6, worin das Isothiazolinon ausgewählt ist unter 5-Chlor-2-methyl-4-isothiazolin-3-om, 2-Methyl-4-isothiazolin-3-on und Mischungen davon.

8. Gegenstand nach einem der Ansprüche 1 bis 7, worin das Benzalkonium-Halogenid als ein N-Alkyl-N-Benzyldimethylammoniumchlorid, beispielsweise einem Gemisch aus N-C₁₄Alkyl-N-benzyl-dimethylammoniumchlorid, N-C₁₂Alkyl-N-benzyl-dimethylammoniumchlorid und N-C₁₆Alkyl-N-benzyl-dimethylammoniumchlorid, vorliegt.

9. Gegenstand nach einem der Ansprüche 1 oder 3 bis 8, eine feste Matrix umfassend, die die bakterizide Zusammensetzung umfasst.

10. Gegenstand nach Anspruch 9, worin die feste Matrix zwischen ungefähr 0,05 Gew.-% und 10 Gew.-% der bakteriziden Zusammensetzung umfasst.

11. Gegenstand nach Anspruch 10, worin die feste Matrix zwischen ungefähr 0,2 Gew.-% und 5 Gew.-% der bakteriziden Zusammensetzung umfasst.

12. Genestand nach Anspruch 9 bis 11, worin die feste Matrix als eine feste Polymermatrix vorliegt, die aus Kunststoffmaterial gebildet ist.

13. Gegenstand nach Anspruch 12, worin das Kunststoffmaterial ausgewählt ist unter Ethylenvinylacetat-Copolymer (EVA), Poly(vinylchlorid) (PVC), Polyethylen, Polypropylen, thermoplastischen Gummis, wie beispielsweise auf Butadien basierendem Block-Copolymer, natürlichen Gummis und Derivaten davon.

14. Gegenstand nach Anspruch 13, worin das Kunststoffmaterial als Ethylenvinylacetat (EVA) vorliegt.

15. Gegenstand nach einem der Ansprüche 12 bis 14, worin das Kunststoffmaterial bei einer Temperatur von 160°C oder weniger wärmeformbar ist.

16. Verfahren zum Verleihen von bakteriziden Eigenschaften an einen Gegenstand nach einem der vorstehenden Ansprüche durch Behandeln des Gegenstandes, durch Sprühen oder Eintauchen, in eine bakteriziden Zusammensetzung, die ein Isothiazolinon, ein in einer wässrigen Lösung befindliches Benzalkonium-Halogenid umfasst, die einen flüssigen Träger beinhalten ,der ausgewählt ist unter einem Alkylen- oder einem Polyalkylenglycol.

17. Verfahren nach Anspruch 16, wobei die bakterizide Zusammensetzung auf den Luftfilter in der Form einer wässrigen Lösung gesprüht wird, die den nichtflüchtigen flüssigen Träger beinhaltet, wobei das Wasser anschließend von dem Luftfilter verdampfen kann.

18. Verfahren nach Anspruch 16, wobei der Luftfilter in eine wässrige Lösung getaucht wird, die den nichtflüchtigen Träger beinhaltet, wobei das Wasser anschließend von dem Luftfilter verdampfen kann.

19. Verfahren nach Anspruch 17 zum Behandeln eines Bestandteils eines Klimaanlagensystems oder eines Ventilationssystems in einem Gebäude, um das Klimaanlagensystem oder Ventilationssystem mit antibakteriellen Eigenschaften zu versehen, welches Verfahren umfasst, Beschichten der Oberflächen der Bestandteile, die die Ventilationsschächte, Leitungen und Rohre ausmachen, und beliebige Luftfilter, die das System ausmachen, mit einer bakteriziden Zusammensetzung, die ein Isothiazolinon und ein Benzalkonium-Halogenid und einen Träger umfasst, der, wie nach einen der Ansprüche 1-4 festgelegt, als ein Glykol vorliegt.

20. Gegenstand nach einem der Ansprüche 1-15, der unter Paneelen und Leitungen für Klimaanlagensysteme und Ventilationssystemen ausgewählt sind, die mit einer Anstrichzusammensetzung beschichtet wird, die eine bakterizide Zusammensetzung umfasst, die ein Isothiazolinon, ein Benzalkonium-Halogenid und einen Träger umfasst, der als ein Glykol vorliegt.

## Revendications

1. Article, à savoir un filtre ou un composant d'un système de conditionnement d'air ou un composant d'un système de ventilation, l'article contenant une composition bactéricide contenant une isothiazolinone, un halogénure de benzalkonium et un support liquide qui est choisi parmi le groupe comprenant un alkylèneglycol ou un polyalkylèneglycol.

2. Article selon la revendication 1, à savoir un filtre ou un composant d'un système de conditionnement d'air ou un composant d'un système de ventilation, ledit composant étant choisi parmi le groupe comprenant des gaines de ventilation, des conduits, des tuyaux et des filtres à air.

3. Article selon la revendication 1 ou 2, dans lequel l'alkylèneglycol ou le polyalkylèneglycol est choisi parmi le groupe comprenant le diéthylèneglycol, l'hexylèneglycol et le polyéthylèneglycol.

4. Article selon la revendication 3, dans lequel l'alkylèneglycol ou le polyalkylèneglycol est le diéthylèneglycol.

5. Article selon l'une quelconque des revendications précédentes, dans lequel l'isothiazolinone est une isothiazolin-3-one substituée ou non substituée.

6. Article selon la revendication 5, dans lequel l'isothiazolinone est une isothiazolinone portant un substituant tel qu'un atome d'halogène en position 5.

7. Article selon la revendication 6, dans lequel l'isothiazolinone est choisie parmi le groupe comprenant la 5-chloro-2-méthyl-4-isothiazolin-3-one, la 2-méthyl-4-isothiazolin-3-one et leurs mélanges.

8. Article selon l'une quelconque des revendications 1 à 7, dans lequel l'halogénure de benzalkonium est un chlorure de N-alkyl-N-benzyl diméthylammonium par exemple un mélange de chlorure de N-alkyl en C₁₄-N-benzyl-diméthylammonium, de chlorure de N-alkyl en C₁₂-N-benzyl-diméthylammonium et de chlorure de N-alkyl en C₁₆-N-benzyldiméthylammonium.

9. Article selon l'une quelconque des revendications 1 ou 3 à 8, comprenant une matrice solide contenant la composition bactéricide.

10. Article selon la revendication 9, dans lequel la matrice solide comprend la composition bactéricide en une quantité entre environ 0,05 % en poids et 10 % en poids.

11. Article selon la revendication 10, dans lequel la matrice solide comprend la composition bactéricide en une quantité entre environ 0,2 % en poids et 5 % en poids.

12. Article selon les revendications 9 à 11, dans lequel la matrice solide est une matrice polymère solide en matière plastique.

13. Article selon la revendication 12, dans lequel la matière plastique est choisie parmi le groupe comprenant un copolymère d'éthylène acétate de vinyle (EVA), du chlorure de polyvinyle (PVC), du polyéthylène, du polypropylène, des caoutchoucs thermoplastiques tels qu'un copolymère séquencé à base de butadiène, des caoutchoucs naturels et leurs dérivés.

14. Article selon la revendication 13, dans lequel la matière plastique est de l'éthylène acétate de vinyle (EVA).

15. Article selon les revendications 12 à 14, dans lequel la matière plastique est thermoformable à une température de 160 °C ou moins.

16. Procédé pour conférer des propriétés bactéricides à un article selon l'une quelconque des revendications précédentes en traitant l'article par pulvérisation ou par immersion, avec une composition bactéricide comprenant une isothiazolinone, un halogénure de benzalkonium dans une solution aqueuse contenant un support liquide choisi parmi le groupe comprenant un alkylèneglycol ou un polyalkylèneglycol.

17. Procédé selon la revendication 16, dans lequel la composition bactéricide est pulvérisée sur le filtre à air sous la forme d'une solution aqueuse contenant le support liquide non volatil, et on laisse ensuite l'eau s'évaporer du filtre à air.

18. Procédé selon la revendication 16, dans lequel le filtre à air est plongé dans une solution aqueuse contenant le support liquide non volatil, et on laisse ensuite l'eau s'évaporer du filtre à air.

19. Procédé selon la revendication 17 pour traiter un composant d'un système de conditionnement d'air ou d'un système de ventilation dans un bâtiment pour munir le système de conditionnement d'air ou le système de ventilation de propriétés antibactériennes, ledit procédé comprenant le fait d'enduire les surfaces des composants constituant les gaines de ventilation, les conduits et les tuyaux, et n'importe quel filtre à air constituant le système, avec une composition bactéricide comprenant une isothiazolinone et un halogénure de benzalkonium et un support liquide qui représente un glycol, comme défini dans l'une quelconque des revendications 1 à 4.

20. Article selon l'une quelconque des revendications 1 à 15, choisi parmi le groupe comprenant des panneaux et des conduits pour des systèmes de conditionnement d'air et pour des systèmes de ventilation, enduits d'une composition de peinture comprenant une composition bactéricide contenant une isothiazolinone et un halogénure de benzalkonium et un support liquide qui représente un glycol.
